# EUROPEAN PATENT SPECIFICATION

(11) **EP 2 352 621 B1**
(45) Date of publication and mention of the grant of the patent: **07.01.2015**
(21) Application number: 09825049.1
(22) Date of filing: 04.11.2009
(51) Int. Cl.: B23Q 5/48, B23B 39/00

(54) **A DRILLING UNIT WITH AUTOMATIC DRILL SHAFT FEEDING, AND METHOD AND MEANS THERETO**
BOHREINHEIT MIT AUTOMATISCHEM BOHRSCHAFTVORSCHUB SOWIE VERFAHREN UND VORRICHTUNG DAFÜR
UNITÉ DE PERÇAGE DOTÉE D'UNE ALIMENTATION AUTOMATIQUE EN MANDRIN DE PERÇAGE, ET PROCÉDÉ ET MOYENS ASSOCIÉS

(30) Priority: 04.11.2008 SE 0802340
(43) Date of publication of application: 10.08.2011
(73) Proprietor: Atlas Copco Industrial Technique AB, 105 23 Stockholm (SE)
(72) Inventor: ERIKSSON, UIf Mikael, SE-186 94 Vallentuna (SE); JACOBSSON, Wilhelm Mattias, SE-142 61 Trångsund (SE)
(86) International application number: PCT/SE2009/000487
(87) International publication number: WO 2010/053421

(56) References cited:
- EP-A2- 0 060 186
- CH-A5- 564 994
- CN-Y- 2 850 805
- GB-A- 515 534
- US-A- 3 679 320
- US-A- 4 594 030
- US-A- 4 890 962
- US-A1- 2004 060 386
- US-B1- 6 343 900

## Description

### Field of invention

The present invention relates to a drilling unit with automatic drill shaft feeding, and more precisely a method and means for changing the drill shaft feeding velocity in such a drilling unit.

### Background of the Invention

These type of drilling units are used e.g. when drilling holes when building of aircraft fuselage. The drilling units are mounted in frames or boring jigs, which are moved between the different boring sites. Depending on the type of material that is processed, and also material thickness, there is a need for varying the automatic drill shaft feeding velocity.

GB 515 534, discloses a machine tool wherein a swinging frame is arranged to carry intermediate gears of a gear train. The swinging frame is pivotally mounted about an axis of a wheel at one end of the gear train and is provided with a cover co-operating with the frame to enclose all the gears whereas means are provided to maintain the said cover closed at all angular positions of the frame about its pivoting point. In order to provide for a different gearing ratio of the gear train, the cover needs to be opened and gears need to be exchanged by others having a different number of teeth.

US2004/0060386 discloses, a transmission mechanism of a drilling tool, the transmission can arrange for change from low or high rotational speed at change of rotational direction of the motor. The transmission mechanism includes a movable slide gear which is responsive to the forward and backward rotation of the motor transmission shaft to axially move to selectively engage with a first or second drive wheel, such to obtain a different gearing ratio. Shifting of the gear ration can only be obtained by means of changing the rotative direction of the motor.

Other drilling equipment in EP 0 060 186 A1, on which the the pre-characterising part of the claims is based, discloses a positive feed power drill having a spindle drive gear train and a spindle feed gear train, provision is made for field adjustment of the differential in the gear ratios of the gear train to adjust the feed rate relative to the drive rate for a particular work-piece material by removing a cap directly over the common shaft for the coupling gears, and replacing at least one of the coupling gears with a gear of the same diameter, tooth height and pitch, but a different number of teeth. The profile of the teeth is modified as the number of teeth is increased or decreased, in order that smooth meshing of the teeth will be assured with adjacent gears which are not changed.

Thus according to prior art, the drilling units have to be rebuilt in order to obtain different feeding velocities. One reason for this is that the drilling units have to be kept small because of the mostly narrow working space around an aircraft fuselage. Thus, a gearbox built into the unit would make it too large.
There is a need for drilling units with variable automatic drill shaft feeding velocities.

### Summary of the Invention

One object of the invention is thus to provide a method for changing the drill shaft feeding velocity in drilling units with automatic drill shaft feeding, which allows for a quick, secure and comfortable change of the feeding velocity.
Another object of the invention is to provide a means for performing the method according to the invention.
A further object of the invention is a drilling unit with automatic drill shaft feeding being equipped with said means for performing the method according to the invention. These and other objects are achieved with the method according to the present invention, comprising providing a gearing cassette with a requested gear ratio; mounting of said cassette having one input axle and one output axle, each connected to a gear adapted to transform the rotational speed transferred to the input axle into a desired output rotational speed on the output axle, on a corresponding output axle on the drill shaft feeding gearbox and a corresponding input axle connected to a feeding mechanism for the drill shaft, respectively, said axles being fitted with suitable interconnection means. Preferably, a number of gearing cassettes having different, predetermined gear ratios are provided.

The means for performing the method according to the invention being a gearing cassette comprising a housing, two mutually meshed gears provided in said housing providing a desired gear ratio, one gear being arranged to be coupled to an output axle on a gear box of the drilling unit, and the other gear being arranged to be coupled to an input axle on the drilling unit, which is connected to said drill shaft feeding mechanism.
A drilling unit with automatic drill shaft feeding according to the invention is adapted to be equipped with an exchangeable and detachable gearing cassette having a desired gear ratio, having an output axle from the gearbox to be coupled to one of the gears in said gearing cassette, and having an input axle to be coupled to the other of the gears in said gearing cassette, which input axle is coupled to the drill shaft feeding mechanism.

### Brief description of Drawings

Further objects, advantages and features of the invention will be apparent from the following detailed description relating to one embodiment of the invention shown in the accompanying drawing, in which
Figure 1 shows a schematic view of a drilling unit with automatic drill shaft feeding, and
Figure 2 shows a schematic cross sectional view of a gearing cassette according to the invention.

### Description of preferred embodiments

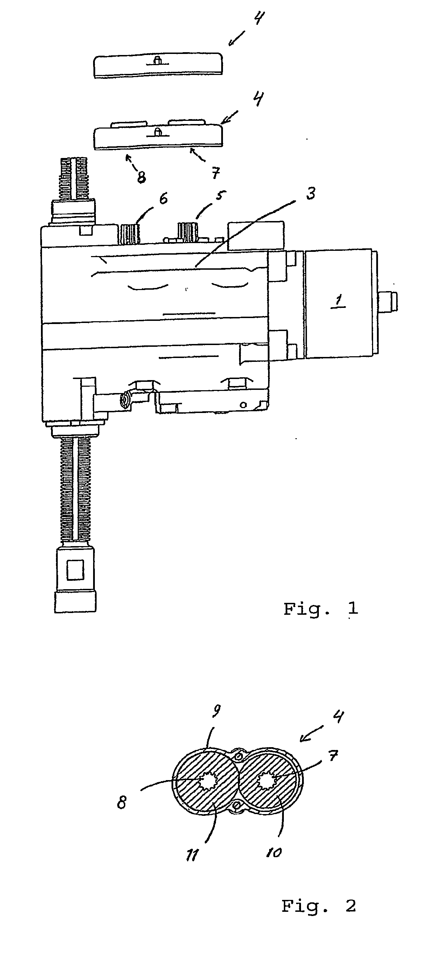

In Figure 1, a drilling unit is shown very schematically. A motor unit 1 drives a drilling shaft 2 through a gearbox 3, and said motor unit 1 also powers the automatic drill shaft feeding through the gearbox. As mentioned in the preamble of this specification, prior art drilling units have to be rebuilt in order to change the drill shaft feeding velocity. This means that the whole unit must be disassembled, gears must be exchanged, and the unit assembled once more.
In order to eliminate this problem and make quick and easy changes of the feeding velocity possible, the drilling unit is provided with an exchangeable gearing cassette 4, which is mounted on the outside of the drilling unit, and which is connected between an output axle 5 from the gearbox, and an input axle 6 connected to the drill shaft feeding mechanism.
A number of gearing cassettes 4 would normally be provided, each having a desired gear ratio for a certain application. Any number of cassettes could be provided, covering a broad spectrum of gear ratios.
As shown in Figure 2 the gearing cassette comprises a housing 9, mutually meshed gears 10, 11 in the housing having axles 7, 8 to be coupled to the above mentioned axles on the drilling unit. In order to obtain a desired gear ratio, the gearing cassettes might comprise more than two gears.
The coupling between the gears in the gearing cassette and the axles on the drilling unit is not critical to the invention, and the man skilled in the art related to coupling of two rotary axles to each other is capable of designing a number of different equivalent solutions. In the schematic drawing is illustrated two axles sticking out of the gearbox of the drilling unit designed as male parts of coupling, to be inserted into female parts in the gearing cassette, not illustrated in the drawing. Of course, this can be made the other way around with axle parts sticking out of the gearing cassettes.
To make the mounting of the gearing cassettes easy and secure, a coupling involving splines might be used.
A great advantage achieved with the invention is that the suggested solution neither adds substantial weight nor volume to the drilling unit, together with the fact that the exchange of gearing cassettes is quick and simple.

## Claims

1. Drilling unit (12) comprising a gearing cassette (4) for changing rotation velocity of a gearbox (3) in a drilling unit (12), said gearbox (3) being provided with an output axle (5) and an input axle (6)
**characterized in that**
the gearing cassette (4) is arranged on the outside of the gearbox (3) wherein the gearing cassette (4) further comprises
• a housing (9)
• at least two meshed gears (10, 11) arranged inside the housing (9) with a certain gear ratio and arranged to connect the gearbox output axle (5) to the gearbox input axle (6),
• one input axle (7) and one output axle (8) each connected to one of the meshed gears (10, 11),
• interconnecting means, for exchangeably connecting the gearing cassette (4) input axle (7) and output axle (8), to the output axle (5) and input axle (6) of the gearbox (3) respectively, such that the gearing cassette (4) may be exchanged by another gearing cassette (4) for adapting the total gear ratio of the gearbox (3) to different unit applications.

2. A drilling unit (12) according to claim 1 wherein the exchangeable cassette (4) is one of a number of exchangeable cassettes (4) each having a desired gear ratio for a certain unit application.

3. A drilling unit (12) according to claim 1 or 2, wherein the interconnecting means comprises of quick coupling means to facilitate connection of said two gears (10, 11) to said output axle (5) and input axle (6) at change of gearing cassette (4).

4. Method for changing rotation velocity of a gearbox (3) in a drilling unit (12), said gearbox (3) being provided with an output axle (5) and an input axle (6), a gearing cassette (4) is provided, wherein the gearing cassette (4) further comprises
• a housing (9),
• at least two meshed gears (10,11) arranged inside the housing (9) with a certain gear ratio and arranged to connect said output axle (5) to input axle (6),
• one input axle (7) and one output axle (8) each connected to one of the meshed gears (10, 11),
• interconnecting means, for exchangeably connecting the gearing cassette (4) input axle (7) and output axle (8), to the output axle (5) and input axle (6) of the gearbox (3) respectively, such that the gearing cassette (4) may be exchanged by another gearing cassette (4)
the method further comprises the step of
• mounting the gearing cassette (4) with a specific gearing ratio on the outside of the gearbox (3) for obtaining a certain total gear ratio of the said gearbox (3) for a certain unit application.

5. Method according to claim 4, comprising the further step of exchanging the exchangeable gearing cassette (4) to another gearing cassette (4) having another gearing ratio, in order to adapt the total gear ratio of the said gearbox (3) for another certain unit application.

## Patentansprüche

1. Bohreinheit (12), umfassend eine Getriebekassette (4) zum Ändern einer Drehgeschwindigkeit eines Getriebes (3) in einer Bohreinheit (12), wobei das Getriebe (3) mit einer Abtriebswelle (5) und einer Antriebswelle (6) bereitgestellt ist, **dadurch gekennzeichnet, dass**
die Getriebekassette (4) auf der Außenseite des Getriebekastens (3) angeordnet ist, wobei die Getriebekassette (4) ferner Folgendes umfasst
• ein Gehäuse (9),
• mindestens zwei verzahnte Zahnräder (10, 11), die im Inneren des Gehäuses (9) mit einem bestimmten Übersetzungsverhältnis angeordnet sind und zum Verbinden der Getriebeabtriebswelle (5) mit der Getriebeantriebswelle (6) angeordnet sind,
• eine Antriebswelle (7) und eine Abtriebswelle (8), die jeweils mit einem der verzahnten Zahnräder (10, 11) verbunden sind,
• Verbindungsmittel zum austauschbaren Verbinden der Antriebswelle (7) und der Abtriebswelle (8) der Getriebekassette mit der jeweiligen Abtriebswelle (5) und Antriebswelle (6) des Getriebes (3), sodass die Getriebekassette (4) durch eine andere Getriebekassette (4) ausgetauscht werden kann, um das Gesamtübersetzungsverhältnis des Getriebes (3) an andere Einheitsanwendungen anzupassen.

2. Bohreinheit (12) nach Anspruch 1, wobei die austauschbare Kassette (4) eine einer Anzahl von austauschbaren Kassetten (4) ist, die jeweils ein gewünschtes Übersetzungsverhältnis für eine bestimmte Einheitsanwendung aufweisen.

3. Bohreinheit (12) nach Anspruch 1 oder 2, wobei das Verbindungsmittel Schnellkupplungsmittel umfasst, um die Verbindung der zwei Zahnräder (10, 11) mit der Abtriebswelle (5) und der Antriebswelle (6) beim Austausch der Getriebekassette (4) zu ermöglichen.

4. Verfahren zum Ändern der Drehgeschwindigkeit eines Getriebes (3) in einer Bohreinheit (12), wobei das Getriebe (3) mit einer Abtriebswelle (5) und einer Antriebswelle (6) bereitgestellt ist und mit einer Getriebekassette (4) bereitgestellt ist, wobei die Getriebekassette (4) ferner Folgendes umfasst
• ein Gehäuse (9),
• mindestens zwei verzahnte Zahnräder (10, 11), die im Inneren des Gehäuses (9) mit einem bestimmten Übersetzungsverhältnis angeordnet sind und zum Verbinden der Abtriebswelle (5) mit der Antriebswelle (6) angeordnet sind,
• eine Antriebswelle (7) und eine Abtriebswelle (8), die jeweils mit einem der verzahnten Zahnräder (10, 11) verbunden sind,
• Verbindungsmittel zum austauschbaren Verbinden der Antriebswelle (7) und der Abtriebswelle (8) der Getriebekassette (4) mit der jeweiligen Abtriebswelle (5) und Antriebswelle (6) des Getriebes (3), sodass die Getriebekassette (4) durch eine andere Getriebekassette (4) ausgetauscht werden kann,
wobei das Verfahren ferner die folgenden Schritte umfasst
• Befestigen der Getriebekassette (4) mit einem spezifischen Übersetzungsverhältnis an der Außenseite des Getriebes (3), um ein bestimmtes Gesamtübersetzungsverhältnis des Getriebes (3) für bestimmte Einheitsanwendungen zu erhalten.

5. Verfahren nach Anspruch 4, umfassend den weiteren Schritt des Austauschens der austauschbaren Getriebekassette (4) durch eine andere Getriebekassette (4), die ein anderes Übersetzungsverhältnis hat, um das Gesamtübersetzungsverhältnis des Getriebes (3) für eine andere bestimmte Einheitsanwendung anzupassen.

## Revendications

1. Unité de perçage (12) comprenant une cassette d'engrenage (4) pour changer la vitesse de rotation d'une boîte de vitesses (3) dans une unité de perçage (12), ladite boîte de vitesses (3) comportant un axe de sortie (5) et un axe d'entrée (6),
**caractérisée par le fait que**
la cassette d'engrenage (4) est agencée sur l'extérieur de la boîte de vitesses (3), la cassette d'engrenage (4) comprenant en outre
• un carter (9)
• au moins deux roues dentées en prise (10, 11) agencées à l'intérieur du carter (9) avec un certain rapport d'engrenage et agencées pour relier l'axe de sortie de boîte de vitesses (5) à l'axe d'entrée de boîte de vitesses (6),
• un axe d'entrée (7) et un axe de sortie (8) reliés chacun à l'une des roues dentées en prise (10, 11),
• des moyens de liaison réciproque, pour relier de façon échangeable l'axe d'entrée (7) et l'axe de sortie (8) de la cassette d'engrenage (4) respectivement à l'axe de sortie (5) et à l'axe d'entrée (6) de la boîte de vitesses (3), de telle sorte que la cassette d'engrenage (4) peut être échangée pour une autre cassette d'engrenage (4) pour adapter le rapport d'engrenage total de la boîte de vitesses (3) à différentes applications de l'unité.

2. Unité de perçage (12) selon la revendication 1, dans laquelle la cassette échangeable (4) est l'une parmi un nombre de cassettes échangeables (4) ayant chacune un rapport d'engrenage souhaité pour une certaine application de l'unité.

3. Unité de perçage (12) selon l'une des revendications 1 ou 2, dans laquelle les moyens de liaison réciproque comprend des moyens d'accouplement rapide pour faciliter la liaison desdites deux roues dentées (10, 11) auxdits axe de sortie (5) et axe d'entrée (6) lors du changement de la cassette d'engrenage (4).

4. Procédé pour changer la vitesse de rotation d'une boîte de vitesses (3) dans une unité de perçage (12), ladite boîte de vitesses (3) comprenant un axe de sortie (5) et un axe d'entrée (6), une cassette d'engrenage (4) étant prévue, la cassette d'engrenage (4) comprenant en outre
• un carter (9),
• au moins deux roues dentées en prise (10, 11) agencées à l'intérieur du carter (9) avec un certain rapport d'engrenage et agencées pour relier ledit axe de sortie (5) à l'axe d'entrée (6),
• un axe d'entrée (7) et un axe de sortie (8) reliés chacun à l'une des roues dentées en prise (10, 11),
• des moyens de liaison réciproque, pour relier de façon échangeable l'axe d'entrée (7) et l'axe de sortie (8) de la cassette d'engrenage (4) respectivement à l'axe de sortie (5) et à l'axe d'entrée (6) de la boîte de vitesses (3), de telle sorte que la cassette d'engrenage (4) peut être échangée pour une autre cassette d'engrenage (4)
le procédé comprend en outre l'étape de
• montage de la cassette d'engrenage (4) ayant un rapport d'engrenage spécifique sur l'extérieur de la boîte de vitesses (3) pour obtenir un certain rapport d'engrenage total de ladite boîte de vitesses (3) pour une certaine application de l'unité.

5. Procédé selon la revendication 4, comprenant l'étape supplémentaire d'échange de la cassette d'engrenage échangeable (4) pour une autre cassette d'engrenage (4) ayant un autre rapport d'engrenage, afin d'adapter le rapport d'engrenage total de ladite boîte de vitesses (3) pour une autre certaine application de l'unité.
